(19) **Europäisches Patentamt / European Patent Office / Office européen des brevets**

(11) **EP 4 693 433 A1**

(12) **EUROPEAN PATENT APPLICATION**
published in accordance with Art. 153(4) EPC

(43) Date of publication:
**11.02.2026 Bulletin 2026/07**

(21) Application number: **24781165.6**

(22) Date of filing: **25.03.2024**

(51) International Patent Classification (IPC):
*H01M 4/13* (2010.01)    *H01M 4/04* (2006.01)
*H01M 4/134* (2010.01)    *H01M 4/66* (2006.01)
*H01M 4/70* (2006.01)    *H01M 10/052* (2010.01)
*H01M 4/1395* (2010.01)    *H01M 10/0562* (2010.01)
*H01M 10/0566* (2010.01)    *H01M 10/0565* (2010.01)

(52) Cooperative Patent Classification (CPC):
**H01M 4/04; H01M 4/13; H01M 4/134;
H01M 4/1395; H01M 4/66; H01M 4/70;
H01M 10/052; H01M 10/0562; H01M 10/0565;
H01M 10/0566**

(86) International application number:
**PCT/KR2024/003731**

(87) International publication number:
**WO 2024/205174 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.03.2023   KR 20230039412
27.12.2023   KR 20230193105**

(71) Applicant: **SAMSUNG SDI CO., LTD.**
**Yongin-si, Gyeonggi-do 17084 (KR)**

(72) Inventors:
• **MOON, Jong Seok**
  **Yongin-si, Gyeonggi-do 17084 (KR)**
• **LEE, Kang Hee**
  **Yongin-si, Gyeonggi-do 17084 (KR)**

• **BAE, Woo Jin**
  **Yongin-si, Gyeonggi-do 17084 (KR)**
• **KIM, Hee Min**
  **Yongin-si, Gyeonggi-do 17084 (KR)**
• **WOO, Hyun Sik**
  **Yongin-si, Gyeonggi-do 17084 (KR)**
• **PARK, Jong Seok**
  **Yongin-si, Gyeonggi-do 17084 (KR)**
• **LEE, Chang Wook**
  **Yongin-si, Gyeonggi-do 17084 (KR)**
• **PARK, Jin Hwan**
  **Yongin-si, Gyeonggi-do 17084 (KR)**

(74) Representative: **Michalski Hüttermann & Partner
Patentanwälte mbB
Kaistraße 16A
40221 Düsseldorf (DE)**

(54) **LITHIUM METAL BATTERY, AND METHOD FOR MANUFACTURING LITHIUM METAL BATTERY ANODE INCLUDED THEREIN**

(57)    Provided are a lithium metal battery and a method for manufacturing an anode included therein, the lithium metal battery comprising a cathode, an anode, and an electrolyte disposed between the cathode and the anode, wherein the anode includes an anode current collector, an anode active material layer disposed on the anode current collector, and a porous layer including a porous structure, the porous layer includes a first region exposed on the anode active material layer, and a second region inserted into the anode active material layer, and the anode active material layer includes a second region into which the porous layer is inserted, and a third region into which the porous layer is not inserted.

EP 4 693 433 A1

# FIG. 1

**Description**

**Technical Field**

The present disclosure relates to a lithium metal battery and a method for manufacturing a lithium metal battery anode included therein.

**Background Art**

Carbonaceous anode active materials such as graphite are widely used in lithium metal batteries commercially available at present. Because carbonaceous anode active materials exhibit no volume change during charging and discharging processes, lithium metal batteries have high stability. Graphite has a low theoretical electric capacity of approximately 372 mAh/g.

Lithium metal may be used as an anode active material. Lithium metal has a very high theoretical electric capacity of approximately 3860 mAh/g. Lithium metal may cause short circuits between a cathode and an anode because dendrites form and grow on the surface of the lithium metal due to side reactions with an electrolyte during charging and discharging processes. As a result, lifespan characteristics of lithium metal batteries including lithium metal deteriorate.

There is a need to develop methods for improving lifespan characteristics of lithium metal batteries including lithium metal.

**Disclosure of Invention**

**Technical Problem**

Provided is a lithium metal battery including an anode for lithium metal batteries having a new structure.

Provided also is a method for an anode for lithium metal batteries included in a lithium metal battery.

**Solution to Problem**

According to an aspect of the present disclosure,

a lithium metal battery includes a cathode, an anode, and an electrolyte disposed between the cathode and the anode, wherein the anode includes an anode current collector,
an anode active material layer disposed on the anode current collector, and
a porous layer including a porous structure,
the porous layer includes a first region exposed on the anode active material layer, and a second region inserted into the anode active material layer, and
the anode active material layer includes the second region into which the porous layer is inserted, and a third region into which the porous layer is not inserted.

According to another aspect of the present disclosure,

a method for manufacturing the anode for lithium metal batteries includes
preparing an anode structure including an anode current collector, an anode active material layer disposed on the anode current collector, and a porous layer disposed on the anode active material layer; and
inserting at least a portion of the porous layer into the anode active material layer by rolling the anode structure by a roll press.

**Advantageous Effects of Invention**

According to an embodiment, a lithium metal battery having improved cycle characteristics may be provided by using an anode including a porous layer.

**Brief Description of Drawings**

FIG. 1 is a cross-sectional view of a lithium metal battery according to an example embodiment.

FIG. 2 is a cross-sectional view of an anode according to an example embodiment.

FIG. 3 is a cross-sectional view of an anode according to another example embodiment.

FIG. 4 is a schematic diagram of a lithium metal battery according to an example embodiment.

FIG. 5 is a schematic diagram of a lithium metal battery according to an example embodiment.

FIG. 6 is a schematic diagram of a lithium metal battery according to an example embodiment.

## Mode for the Invention

During charging and discharging processes of lithium metal batteries including lithium metal as an anode active material, a lithium-containing metal layer is precipitated and dissolved between an anode current collector and an electrolyte layer. As the charging and discharging process of a lithium metal battery is repeated, an anode active material layer includes impurities remaining in electrodes, decomposition products of an electrolyte, and the like. Therefore, the anode active material layer has a rough and hard surface due to the impurities included therein. Lithium dendrites are formed on a lithium-containing metal layer having such a rough surface. These lithium dendrites may continuously grow during charging and discharging processes, thereby causing short circuits between a cathode and an anode. In addition, as charging and discharging of a lithium metal battery are repeated, the electrolyte is continuously consumed due to side reactions, so that cycle characteristics of the lithium metal battery may rapidly deteriorate.

A lithium metal battery according an embodiment includes an anode including a porous layer, and an anode active material layer is disposed between the porous layer and an anode current collector, so that the porous layer is separated from the anode current collector in the anode. Therefore, formation of lithium dendrite is inhibited in the anode active material layer, and consumption of the electrolyte is inhibited, so that cycle characteristics of the lithium metal battery including such an anode may be improved.

The present inventive concept described below allows various changes and numerous embodiments, particular embodiments will be illustrated in the drawings and described in detail in the written description. However, this is not intended to limit the present inventive concept to particular modes of practice, and it is to be appreciated that all modifications, equivalents, and substitutes that do not depart from the spirit and technical scope of the present inventive concept are encompassed in the present inventive concept.

The terms used herein are merely used to describe particular embodiments and are not intended to limit the present inventive concept. An expression used in the singular encompasses the expression of the plural, unless it has a clearly different meaning in the context. In the present specification, it is to be understood that the terms such as "including" or "having" etc., are intended to indicate the existence of the features, numbers, operations, elements, parts, components, materials, or combinations thereof disclosed in the specification, and are not intended to preclude the possibility that one or more other features, numbers, operations, elements, parts, components, materials, or combinations thereof may exist or may be added. As used herein, the "/" may be interpreted as either "and" or "or" depending on situations.

In the drawings, thicknesses of various layers and regions may be enlarged or reduced for clarity. Throughout the specification, like reference numerals denote like elements. Throughout the specification, it will be understood that when one element such as layer, film, region, or plate, is referred to as being "on" another element, it may be directly on the other element, or intervening elements may also be present therebetween. Although the terms first, second, etc. may be used herein to describe various components, these components should not be limited by these terms. These terms are only used to distinguish one component from another. In this specification and drawings, components having substantially the same functional configuration are referred to by the same reference numerals, and redundant descriptions are omitted.

As used herein, the "size" of a particle may be, for example, "particle diameter". A "particle diameter" of particles indicates an average diameter of spherical particles or an average length of major axes of non-spherical particles. Particle diameters of particles may be measured using a particle size analyzer (PSA). The "particle diameter" of particles is, for example, an average particle diameter. The average particle diameter is, for example, a median particle diameter (D50). The median particle diameter D50 may be a particle diameter corresponding to a 50 % cumulative volume calculated from the smallest particle in a particle size distribution measured, for example, by laser diffraction method.

In the present disclosure, the term "metal" includes metals and metalloids such as silicon and germanium in an elemental or ionic state.

In the present disclosure, the term "alloy" refers to a combination of two or more metals.

In the disclosure, the term "cathode active material" refers to a material for cathodes allowing lithiation and delithiation.

In the disclosure, the term "anode active material" refers to a material for anodes allowing lithiation and delithiation.

In the disclosure, the terms "lithiation" and "lithiating" refer to a process of adding lithium to a cathode active material or a anode active material.

In the disclosure, the terms "delithiation" and "delithiating" refer to a process of removing lithium from a cathode active material or an anode active material.

In the present disclosure, the terms "charging" and "charge" refer to a process of supplying electrochemical energy to a battery.

In the disclosure, the terms "discharging" and "discharge" refer to a process of removing electrochemical energy from a battery.

In the present disclosure, the terms "positive electrode" and "cathode" refer to an electrode in which electrochemical reduction and lithiation occur during discharging.

In the disclosure, the terms "negative electrode" and "anode" refer to an electrode in which electrochemical oxidation and delithiation occur during discharging.

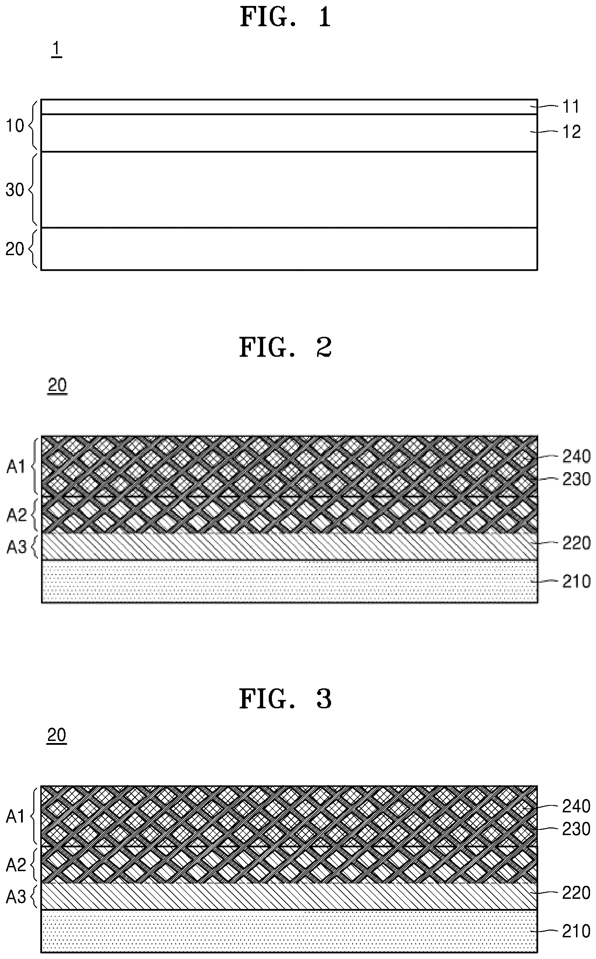

FIG. 1 is a cross-sectional view of a lithium metal battery according to an example embodiment. FIG. 2 is a cross-sectional view of an anode according to an example embodiment. FIG. 3 is a cross-sectional view of an anode according to another example embodiment.

Hereinafter, a lithium metal battery including an anode for lithium metal batteries, and a method of manufacturing the anode for lithium metal batteries will be described in more detail with reference to the drawings.

A lithium metal battery according an embodiment includes: a cathode 10; an anode 20; and an electrolyte 30 disposed between the cathode 10 and the anode 20, wherein the anode 20 includes: an anode current collector 210; an anode active material layer 220 disposed on the anode current collector 210; and a porous layer 230 including a porous structure, the porous layer 230 includes a first region A1 exposed on the anode active material layer and a second region A2 inserted into the anode active material layer, and the anode active material layer 220 includes the second region A2 into which the porous layer 230 is inserted and a third region A3 into which the porous layer 230 is not inserted. For example, because the anode 20 included in the lithium metal battery 1 includes the third region A3 into which the porous layer 230 is not inserted, so that in the anode active material layer 220, the porous layer 230 may be separated from the anode current collector 210. In this case, occurrence of cracks or damages that may be caused in the anode 20 during a process of inserting the porous layer 230 into the anode active material layer 220 may be prevented. Accordingly, cycle characteristics of the lithium metal battery 1 including the anode 20 may be improved.

In addition, the first region A1 of the porous layer 230 exposed on the anode active material layer, serving as a lithium host during charging of the lithium metal battery 1, may effectively prevent formation of lithium dendrite on the anode active material layer 220. In addition, the second region A2, where the porous layer 230 and the anode active material layer 220 overlap serves as a lithium source and cycle characteristics of the lithium metal battery 1 including the same may be improved.

[Anode]

Referring to FIGS. 2 and 3, the anode 20 according an embodiment may include: the anode current collector 210; the anode active material layer 220 disposed on the anode current collector; and the porous layer 230 including a porous structure, wherein the porous layer 230 may include the first region A1 exposed on the anode active material layer and the second region A2 inserted into the anode active material layer, and the anode active material layer 220 may include the second region A2 into which the porous layer 230 is inserted and the third region A3 into which the porous layer 230 is not inserted.

According to an embodiment, a thickness of the first region A1 may satisfy 100 to 130 % of Expression 1 below.

$$\text{Cathode current density (mAh/cm}^2) * 4.89\ \mu\text{m/(mAh/cm}^2) * (1/\text{porosity of first region)} \qquad \text{Expression 1}$$

For example, Expression 1 represents a minimum height ($\mu$m) required to fill lithium ions, which are migrating from the cathode 10 to the anode 20, in the first region A1 of the porous layer 230. For example, the value 4.89 $\mu$m/(mAh/cm$^2$) refers to a height filled with lithium per 1 mAh/cm$^2$ of cathode current density. For example, in the case where the thickness of the first region A1 satisfies 100 to 130 % of the value of Expression 1, the lithium ions migrating from the cathode 10 to the anode 20 are plated in the first region A1 of the porous layer 230, thereby effectively preventing formation of lithium dendrite during a charging process.

According to an embodiment, while the lithium metal battery 1 is charged, a lithium plated layer 240 is formed on the anode active material layer 220, and a thickness of the lithium plated layer 240 may be 130 % or less of the thickness of the first region. For example, the thickness of the lithium plated layer 240 may be 100 to 130 % of the thickness of the first region A1. For example, the thickness of the lithium plated layer 240 may be identical to that of the first region A1.

For example, at least a portion of the lithium plated layer 240 may be located in the porous layer 230. For example, the lithium plated layer 240 may be located in the porous layer 230. In this case, because at least a portion of the lithium plated layer 240 is formed in the porous layer 230, non-uniform growth of the lithium plated layer 240 may be prevented and formation of lithium dendrite may be effectively prevented.

According to an embodiment, a porosity of the porous structure included in the first region A1 of the porous layer 230 may be 1 to 99 %. For example, the porosity of the porous structure included in the first region A1 of the porous layer 230 may be 1 to 99 %, 50 to 99 %, or 50 to 90 %.

According to an embodiment, a porosity of the porous structure included in the second region A2 of the porous layer 230 may be less than the porosity of the porous structure included in the first region A1. For example, the porosity of the porous structure included in the porous layer 230 may decrease in a direction from the first region A1 to the second region A2. For example, the porosity of the porous structure included in the second region A2 before charging may be 50 % or less, 40 % or less, 30 % or less, 20 % or less, 10 % or less, 5 % or less, 1 % or less, or 0 %.

According to an embodiment, sizes of pores included in the first region of the porous layer 230 may be 1 nm to 10 $\mu$m. For example, the sizes of pores included in the first region in the porous layer 230 may be 1 nm to 5 $\mu$m, 1 nm to 3 $\mu$m, 10 nm to 10 $\mu$m, 0.1 $\mu$m to 10 $\mu$m, 0.2 $\mu$m to 10 $\mu$m, 0.5 $\mu$m to 10 $\mu$m, 1 $\mu$m to 10 $\mu$m, or 1 $\mu$m to 3 $\mu$m.

According to an embodiment, the thickness of the first region A1 in the porous layer 230 may be 1 $\mu$m to 100 $\mu$m, and a thickness of the second region A2 in the porous layer 230 may be 1 $\mu$m to 50 $\mu$m. For example, the thickness of the first region A1 in the porous layer 230 may be 1 $\mu$m to 100 $\mu$m, 5 $\mu$m to 100 $\mu$m, 10 $\mu$m to 100 $\mu$m, 15 $\mu$m to 100 $\mu$m, 20 $\mu$m to 100 $\mu$m, 25 $\mu$m to 100 $\mu$m, 1 $\mu$m to 90 $\mu$m, 1 $\mu$m to 80 $\mu$m, 1 $\mu$m to 70 $\mu$m, or 25 $\mu$m to 70 $\mu$m. For example, the thickness of the second region A2 in the porous layer 230 may be 1 $\mu$m to 50 $\mu$m, 5 $\mu$m to 50 $\mu$m, 10 $\mu$m to 50 $\mu$m, 1 $\mu$m to 40 $\mu$m, 1 $\mu$m to 30 $\mu$m, 1 $\mu$m to 25 $\mu$m, or 10 $\mu$m to 25 $\mu$m.

According to an embodiment, the thickness of the second region A2 may be 70 % or less of the thickness of the anode active material layer 220. According to an embodiment, the thickness of the second region A2 may be 50 % or less, 10 to 50 %, or 20 to 50 % of the thickness of the anode active material layer 220. For example, in the case where the thickness of the second region A2 satisfies 70 % or less of the thickness of the anode active material layer 220, damage to the anode 20 that may be caused during a process of inserting the porous layer 230 into the anode active material layer 220 may be effectively prevented. Accordingly, lifespan characteristics of the lithium metal battery 1 including the anode 20 may be improved.

According to an embodiment, a hardness of the porous layer 230 may be greater than that of the anode active material layer 220. For example, hardness refers to the degree of a material's rigidity and may be measured using a Brinell hardness tester, or the like. For example, because the hardness of the porous layer 230 is greater than that of the anode active material layer 220, the porous layer 230 may be more easily inserted into the anode active material layer 220, and cracks that may occur within the anode 20 during the insertion process may be more effectively prevented.

According to an embodiment, the porous layer 230 includes a metal or a carbonaceous material, and the metal may include copper (Cu), nickel (Ni), stainless steel (SUS), iron (Fe), or cobalt (Co). For example, the metal may include copper (Cu), nickel (Ni), stainless steel (SUS), or iron (Fe). For example, the carbonaceous material may include carbon steel.

According to an embodiment, the porous structure included in the porous layer 230 may include a foam structure or a mesh structure. For example, the porous structure may include a foam structure. For example, in the case where the porous structure includes a foam structure, lithium ions may move more easily through three-dimensional pathways within the foam structure, thereby reducing internal resistance. As a result, charge/discharge efficiency of the lithium metal battery 1 may be improved.

According to an embodiment, the porous structure included in the porous layer 230 may be acid-treated. For example, the porous structure may be acid-treated with hydrochloric acid, nitric acid, or sulfuric acid. For example, in the case where the porous structure is acid-treated, oxides present on the surface of the porous structure may be removed, thereby increasing a proportion of metal atoms on the surface of the porous structure. Therefore, lithium ions may be easily oxidized and reduced in the porous structure, so that cycle characteristics of the lithium metal battery 1 including the same and charging and discharging characteristics.

According to an embodiment, the acid-treated porous structure may have an oxide peak-to-metal peak ratio of 50:1 to 1:1 when analyzed by X-ray photoelectron spectroscopy (XPS). For example, the acid-treated porous structure may have may have an oxide peak-to-metal peak ratio of 40:1 to 1:1, 30:1 to 1:1, 20:1 to 1:1, 50:1 to 2:1, 50:1 to 3:1, 30:1 to 2:1 or 20:1 to 3:1 when analyzed by XPS.

According to an embodiment, the porous structure may further include a coating layer formed on the surface thereof. For example, the coating layer may include a lithiophilic meterial. For example, the coating layer may include gold (Au), platinum (Pt), palladium (Pd), silicon (Si), silver (Ag), aluminum (Al), bismuth (Bi), tin (Sn), or zinc (Zn). For example, the coating layer formed on the surface of the porous structure may enhance the reactivity with lithium ions, thereby further improving the charge/discharge efficiency of the lithium metal battery 1.

[Anode: Anode Active Material Layer]

According to an embodiment, the anode active material layer 220 may include, for example, lithium foil, lithium powder, plated lithium, a carbonaceous material, or any combination thereof. The anode active material layer including lithium foil may be, for example, a lithium metal layer. The anode active material layer including lithium powder may be formed by applying a slurry including lithium powder, a binder, etc., onto the anode current collector. The binder may be a fluorine-based binder, such as polyvinylidene fluoride (PVDF). The anode active material layer may not include a carbonaceous anode active material. Therefore, the anode active material layer may be formed of a metallic anode active material.

A thickness of the anode active material layer 220 may be, for example, 0.1 $\mu$m to 100 $\mu$m, 0.1 $\mu$m to 80 $\mu$m, 1 $\mu$m to 80 $\mu$m, or 10 $\mu$m to 80 $\mu$m, but is not limited thereto, and may be adjusted in accordance with shape, capacity, and the like of the lithium metal battery. If the anode active material layer 23 is too thick, structural stability of the lithium metal battery may deteriorate and side reactions may increase. If the anode active material layer 220 is too thin, energy density of the lithium metal battery may decrease. A thickness of the lithium foil may be, for example, 1 $\mu$m to 50 $\mu$m, 1 $\mu$m to 30 $\mu$m, or 10 $\mu$m to 30 $\mu$m, or 10 $\mu$m to 80 $\mu$m. If the lithium foil has a thickness within the ranges described above, lifespan characteristics of the lithium metal battery may further be improved. A particle diameter of lithium powder may be, for example, 0.1 $\mu$m to 3 $\mu$m, 0.1 $\mu$m to 2 $\mu$m, or 0.1 $\mu$m to 2 $\mu$m. If the lithium powder has a thickness within the ranges described above, lifespan characteristics of the lithium metal battery may further be improved.

For example, the anode active material layer 220 may include the second region A2 into which the porous layer 230 is inserted and the third region A3 into which the porous layer 230 is not inserted. For example, because the anode active material layer 220 includes the third region A3, the anode current collector 210 may be separated from the porous layer 230. As a result, damage to the anode 20 that may be caused during a process of inserting the porous layer 230 into the anode active material layer 220 may be effectively prevented, and lifespan characteristics of the lithium metal battery may be improved because the active material included in the third region A3 is used during the charging and discharging process.

According to an embodiment, the thickness of the second region A2 in the anode active material layer 220 may be 70 % or less of a total thickness of the anode active material layer.

According to an embodiment, a thickness of the third region A3 in the anode active material layer 220 may be 30 % or more of the total thickness of the anode active material layer. According to an embodiment, the thickness of the third region A3 in the anode active material layer 220 may be 0.3 to 50 $\mu$m.

[Anode: Anode Current Collector]

A material constituting the anode current collector 210 may be any material that does not react with lithium, i.e., any conductive material that does not form an alloy or compound with lithium. The metal substrate may be formed of, for example, a metal or an alloy. The metal substrate may be formed of, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. For example, the anoe current collector 210 may be in a form selected from foil, film, plate, porous structure, mesoporous structure, through-hole-containing structure, polygonal ring, mesh, foam, and non-woven structure, but is not limited thereto and may be in any form commonly available in the art.

For example the anode current collector 210 may have a reduced thickness compared to that included in conventional anodes. Accordingly, the anode according to the present disclosure is distinguished from conventional electrodes that include a thick current collector, by including a thin-film current collector. Because the electrode according an embodiment includes a thin-film current collector with a reduced thickness, the thickness of the anode active material layer relatively increases in the anode including the thin-film current collector. As a result, an energy density of a lithium metal battery including such an electrode increases. A thickness of the anode current collector 210 including a metal substrate and an interlayer may be, for example, less than 15 $\mu$m, 14.5 $\mu$m or less, or 14 $\mu$m or less. The thickness of the anode current collector 210 may be, for example, 0.1 $\mu$m to less than 15 $\mu$m, 1 $\mu$m to 14.5 $\mu$m, 2 $\mu$m to 14 $\mu$m, 3 $\mu$m to 14 $\mu$m, 5 $\mu$m to 14 $\mu$m, or 10 $\mu$m to 14 $\mu$m.

A material constituting the anode current collector 210 may be any material that does not react with lithium, i.e., any conductive material that does not form an alloy or compound with lithium. The anode current collector 210 may be formed of, for example, a metal or an alloy. The anode current collector 210 may be formed of, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

For example, the anode current collector 210 may be in a form selected from foil, film, plate, porous structure, mesoporous structure, through-hole-containing structure, polygonal ring, mesh, foam, and non-woven structure, but is not limited thereto and may be in any form commonly available in the art.

The anode current collector 210 may include, for example, a base film and a metal layer disposed on one or both sides of the base film. The anode current collector 210 may include a substrate, and the substrate may have a structure including a base film and a metal layer disposed on one side or both sides of the base film. The above-described interlayer may further be disposed on the metal layer. The base film may include, for example, a polymer. The polymer may be, for example, a thermoplastic polymer. The polymer may include, for example, polyethyleneterephthalate (PET), polyethylene (PE), polypropylene (PP), polybutyleneterephthalate (PBT), polyimide (PI), or any combination thereof. Because the base film includes the thermoplastic polymer, the base film melts in the case of occurrence of a short circuit, there by inhibiting a rapid increase in current. The base film may be, for example, an insulator. The metal layer may include, for example, copper (Cu), stainless steel, titanium (Ti), iron (Fe), cobalt (Co), nickel (Ni), or an alloy thereof. The metal layer may act as an electrochemical fuse to be cut if an overcurrent occurs, thereby preventing a short circuit. By controlling a thickness of the metal layer, a limiting current and a maximum current may be adjusted. The metal layer may be plated or deposited on the base film. If the thickness of the metal layer decreases, the limiting current and/or maximum current of the anode current collector 210 decrease, so that stability of the lithium metal battery may be improved at a short circuit. A lead tab may be added onto the metal layer for connection with the outside. The lead tab may be welded to the metal layer or a metal layer/base film stack structure by ultrasonic welding, laser welding, spot welding, and the like. While the base film and/or the metal layer melts during welding, the metal layer may be electrically connected to the lead tab. A metal chip may further be added between the metal layer and the lead tab for stronger welding between the metal layer and the lead tab. The metal chip may be a chip of the same material as the metal of the metal layer. The metal chip may be, for example, metal foil and metal mesh. The metal chip may be, for example, Al foil, copper foil, and SUS foil. By disposing the metal chip on the metal layer and performing welding with the lead tab, the lead tab may be welded to a metal chip/metal layer stack structure or a metal chip/metal layer/base film stack structure. While the base film, the metal layer, and/or the metal chip melt during welding, the metal layer or the metal layer/metal chip stack structure may be electrically connected to the lead tab. A metal chip and/or a lead tab may further be added to a portion of the metal layer. A thickness of the base film may be, for example, 1 to 50 $\mu$m, 1.5 to 50 $\mu$m, 1.5 to 40 $\mu$m, or 1 to 30 $\mu$m. With the thickness of the base film satisfying the above-described ranges, the weight of an anode assembly may be more effectively reduced. A melting point of the base film may be, for example, 100 to 300 °C, 100 to 250 °C, or 100 to 200 °C. If the base film has a melting point within the above-described ranges, the base film may melt during a process of welding the lead tab to be easily bound to the lead tab. To improve adhesion between the base film and the metal layer, surface treatment such as corona treatment may be performed on the base film. A thickness of the metal layer may be, for example, 0.01 to 3 $\mu$m, 0.1 to 3 $\mu$m, 0.1 to 2 $\mu$m, or 0.1 to 1 $\mu$m. With the thickness of the metal layer satisfying the above-described ranges, stability of the anode assembly may be obtained while maintaining conductivity thereof. A thickness of the metal chip may be, for example, 2 to 10 $\mu$m, 2 to 7 $\mu$m, or 4 to 6 $\mu$m. If the thickness of the metal chip is within the above-described ranges, the metal layer may be connected to the lead tab more easily. Because the anode current collector 210 has the above-described structure, the weight of the electrode may be reduced, so that energy density of the lithium battery may be increased.

According to an embodiment, the anode 20 may further include an interlayer disposed between the anode current collector 210 and the anode active material layer 220.

According to an embodiment, the interlayer may be disposed, for example, directly on one surface or both surfaces of the anode current collector 210. Therefore, another layer may not be disposed between the anode current collector 210 and the interlayer. By disposing the interlayer directly on one surface or both surfaces of the anode current collector 210, binding strength between the anode current collector 210 and the anode active material layer 220 may further be improved.

A thickness of the interlayer (not shown) may be, for example, 30 % or less of the thickness of the anode current collector 210. The thickness of the interlayer (not shown) may be, for example, 0.01 to 30 %, 0.1 to 30 %, 0.5 to 30 %, 1 to 25 %, 1 to 20 %, 1 to 15 %, 1 to 10 %, 1 to 5 %, or 1 to 3 % of the thickness of anode current collector 210. The thickness of the interlayer (not shown) may be, for example, 10 nm to 5 $\mu$m, 50 nm to 5 $\mu$m, 200 nm to 4 $\mu$m, 500 nm to 3 $\mu$m, 500 nm to 2 $\mu$m, 500 nm to 1.5 $\mu$m, or 700 nm to 1.3 $\mu$m. Because the interlayer (not shown) has a thickness within the range described above, binding strength between the anode current collector 210 and the anode active material layer 220 may further be improved, and an increase in interfacial resistance may be suppressed.

For example, the interlayer may include a binder. Because the interlayer includes the binder, binding strength between the anode current collector 210 and the anode active material layer 220 may further be improved. The binder included in the interlayer (not shown) is, for example, a conductive binder or a non-conductive binder.

The conductive binder may be, for example, an ion-conductive binder and/or an electron-conductive binder. A binder having both ionic conductivity and electronic conductivity may both belong to the ion-conductive binder and the electron-conductive binder.

The ion-conductive binder may be, for example, polystyrene sulfonate (PSS), polyvinylidene fluoride-hexafluoropropylene copolymer (PVDF-HFP), polyvinyl fluoride (PVF), polyvinylidene fluoride (PVDF), poly(methyl methacrylate) (PMMA), polyethylene oxide (PEO), polyethylene glycol (PEG), polyacrylonitrile (PAN), polytetrafluoroethylene (PTFE), poly(3,4-ethylenedioxythiophene) (PEDOT), polypyrrole (PPY), polyaniline (PANI), and polyacetylene (PA). The ion conductive binder may include a polar functional group. An ion conductive binder including a polar functional group may be, for example, Nafion, Aquivion, Flemion, Gore, Aciplex, Morgane ADP, sulfonated poly(ether ether ketone) (SPEEK), sulfonated poly(arylene ether ketone ketone sulfone) (SPAEKKS), sulfonated poly(aryl ether ketone), (SPAEK), poly [bis(benzimidazobenzisoquinolinones)] (SPBIBI), poly(styrene sulfonate) (PSS), or lithium 9,10-diphenylanthracene-2-sulfonate (DPASLi$^+$). The electron conductive binder may be, for example, polyacetylene, polythiophene, polypyrrole, poly(p-phenylene), poly(phenylenevinylene), poly(phenylenesulfide), or polyaniline. The interlayer may be, for example, a conductive layer including a conductive polymer.

The binder included in the interlayer may be, for example, a fluorine-based binder. The fluorine-based binder included in the interlayer may be, for example, polyvinylidenefluoride (PVDF). The interlayer may be disposed on the anode current collector 210, for example, by a dry method or a wet method. The interlayer may be, for example, an adhesive layer including the binder.

The interlayer may further include, for example, a carbonaceous conductive material. The interlayer may be, for example, a conductive layer, because the interlayer includes the carbonaceous conductive material. The interlayer may be a conductive layer including, for example, the binder and the carbonaceous conductive material.

The interlayer may be disposed on the anode current collector 210 by a dry method such as CVD or PVD. The interlayer may be disposed on the anode current collector 210 by a wet method such as spin coating or dip coating. The interlayer may be, for example, disposed on the anode current collector 210 by depositing a carbonaceous conductive material on the anode current collector 210. The dry-coated interlayer is formed of a carbonaceous conductive material and may not include a binder. Alternatively, the interlayer may be disposed on the anode current collector by coating a composition including a carbonaceous conductive material, a binder, and a solvent on the surface of the anode current collector and drying the coated composition. The interlayer may have a single-layer or multi-layer structure.

[Lithium Metal Battery]

A lithium battery 1 according to an embodiment may include: a cathode 10; the above-described anode 20; and an electrolyte 30 disposed between the cathode and the anode. The lithium metal battery may have increased capacity and excellent lifespan characteristics by including the above-described anode.

For example, the lithium metal battery 1 may include a liquid electrolyte, a semi-solid gel electrolyte, a solid electrolyte, or any combination thereof, as the electrolyte.

Although the lithium metal battery 1 is prepared, for example, by the following exemplary method, the method is not limited thereto and may be adjusted according to required conditions.

(Anode)

The above-described anode is prepared.

(Cathode)

First, a cathode active material composition is prepared by mixing a cathode active material, a conductive material, a binder, and a solvent. The prepared cathode active material composition may directly be coated on an aluminum current collector and dried to prepare a cathode plate on which a cathode active material layer 12 is formed. In other embodiments, a cathode 10 including the cathode active material layer 12 may be prepared by casting the cathode active material composition on a separate support and laminating a film separated from the support on an aluminum current collector.

The cathode active material may be any lithium-containing metal oxide commonly used in the art without limitation. For example, the cathode active material may include at least one composite oxide of lithium and a metal selected from cobalt, manganese, nickel, and any combination thereof, and examples thereof may be a compound represented by one of the following formulae: $Li_aA_{1-b}B_bD_2$ (wherein $0.90 \leq a \leq 1$ and $0 \leq b \leq 0.5$); $Li_aE_{1-b}B_bO_{2-c}D_c$ (wherein $0.90 \leq a \leq 1$, $0 \leq b \leq 0.5$ and $0 \leq c \leq 0.05$); $LiE_{2-b}B_bO_{4-c}D_c$ (wherein $0 \leq b \leq 0.5$ and $0 \leq c \leq 0.05$); $Li_aNi_{1-b-c}Co_bB_cD_\alpha$ (wherein $0.90 \leq a \leq 1$, $0 \leq b \leq 0.5$, $0 \leq c \leq 0.05$ and $0 < \alpha \leq 2$); $Li_aNi_{1-b-c}Co_bB_cO_{2-\alpha}F_\alpha$ (wherein $0.90 \leq a \leq 1$, $0 \leq b \leq 0.5$, $0 \leq c \leq 0.05$ and $0 < \alpha < 2$); $Li_aNi_{1-b-c}Co_bB_cO_{2-\alpha}F_2$ (wherein $0.90 \leq a \leq 1$, $0 \leq b \leq 0.5$, $0 \leq c \leq 0.05$ and $0 < \alpha < 2$); $Li_aNi_{1-b-c}Mn_bB_cD_\alpha$ (wherein $0.90 \leq a \leq 1$, $0 \leq b \leq 0.5$, $0 \leq c \leq 0.05$ and $0 < \alpha \leq 2$); $Li_aNi_{1-b-c}Mn_bB_cO_{2-\alpha}F_\alpha$ (wherein $0.90 \leq a \leq 1$, $0 \leq b \leq 0.5$, $0 \leq c \leq 0.05$ and $0 < \alpha < 2$); $Li_aNi_{1-b-c}Mn_bB_cO_{2-\alpha}F_2$ (wherein $0.90 \leq a \leq 1$, $0 \leq b \leq 0.5$, $0 \leq c \leq 0.05$ and $0 < \alpha < 2$); $Li_aNi_bE_cG_dO_2$ (wherein $0.90 \leq a \leq 1$, $0 \leq b \leq 0.9$, $0 \leq c \leq 0.5$ and $0.001 \leq d \leq 0.1$); $Li_aNi_bCo_cMn_dGeO_2$ (wherein $0.90 \leq a \leq 1$, $0 \leq b \leq 0.9$, $0 \leq c \leq 0.5$, $0 \leq d \leq 0.5$ and $0.001 \leq e \leq 0.1$); $Li_aNiG_bO_2$ (wherein $0.90 \leq a \leq 1$ and $0.001 \leq b \leq 0.1$); $Li_aCoG_bO_2$ (wherein $0.90 \leq a \leq 1$ and $0.001 \leq b \leq 0.1$); $Li_aMnG_bO_2$ (wherein $0.90 \leq a \leq 1$ and $0.001 \leq b \leq 0.1$); $Li_aMn_2G_bO_4$ (wherein $0.90 \leq a \leq 1$ and $0.001 \leq b \leq 0.1$); $QO_2$; $QS_2$; $LiQS_2$; $V_2O_5$; $LiV_2O_5$; $LiIO_2$; $LiNiVO_4$; $Li_{(3-f)}J_2(PO_4)_3$ (wherein $0 \leq f \leq 2$); $Li_{(3-f)}Fe_2(PO_4)_3$ (wherein $0 \leq f \leq 2$); and $LiFePO_4$.

In the formulae representing compounds above, A may be Ni, Co, Mn, or any combination thereof; B may be Al, Ni, Co, Mn, Cr, Fe, Mg, Sr, V, a rare earth element, or any combination thereof; D may be O, F, S, P, or any combination thereof; E may be Co, Mn, or any combination thereof; F may be F, S, P, or any combination thereof; G may be Al, Cr, Mn, Fe, Mg, La, Ce, Sr, V, or any combination thereof; Q may be Ti, Mo, Mn, or any combination thereof; I may be Cr, V, Fe, Sc, Y, or any combination thereof; and J may be V, Cr, Mn, Co, Ni, Cu, or any combination thereof. The above-described compound having a coating layer on the surface thereof may also be used or a mixture of the above-described compound and a compound having a coating layer may also be used. The coating layer added to the surface of the compound may include, for example, a compound of a coating element such as an oxide, hydroxide, oxyhydroxide, oxycarbonate, or hydroxycarbonate of the coating element. The compound constituting the coating layer may be amorphous or crystalline. The coating element included in the coating layer may be Mg, Al, Co, K, Na, Ca, Si, Ti, V, Sn, Ge, Ga, B, As, Zr, or any mixture thereof. A method of forming the coating layer may be selected from those not adversely affecting physical properties of the cathode active material. The coating method may be, for example, spray coating and dip coating. These methods may be obvious to those of ordinary skill in the art, and thus detailed descriptions thereof will not be given.

The cathode active material may be, for example, $Li_aNi_xCo_yM_zO_{2-b}A_b$ (wherein $1.0 \leq a \leq 1.2$, $0 \leq b \leq 0.2$, $0.8 \leq x < 1$, $0 < y \leq 0.3$, $0 < z \leq 0.3$, x+y+z=1, M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or any combination thereof, and A is F, S, Cl, Br, or any combination thereof), $LiNi_xCo_yMn_zO_2$ (wherein $0.8 \leq x \leq 0.95$, $0 \leq y \leq 0.2$, $0 < z \leq 0.2$ and x+y+z=1), $LiNi_xCo_yAl_zO_2$ (wherein $0.8 \leq x \leq 0.95$, $0 \leq y \leq 0.2$, $0 < z \leq 0.2$, and x+y+z=1), $LiNi_xCo_yMn_zAl_wO_2$ (wherein $0.8 \leq x \leq 0.95$, $0 \leq y \leq 0.2$, $0 < z \leq 0.2$, $0 < w \leq 0.2$, and x+y+z+w=1), $Li_aCo_xM_yO_{2-b}A_b$ (wherein $1.0 \leq a \leq 1.2$, $0 \leq b \leq 0.2$, $0.9 \leq x \leq 1$, $0 \leq y \leq 0.1$, x+y=1, M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or any combination thereof, and A is F, S, Cl, Br, or any combination thereof), $Li_aNi_xMn_yM'_zO_{2-b}A_b$ (wherein $1.0 \leq a \leq 1.2$, $0 \leq b \leq 0.2$, $0 < x \leq 0.3$, $0.5 \leq y < 1$, $0 < z \leq 0.3$, x+y+z=1, M' is cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or any combination thereof, and A is F, S, Cl, Br, or any combination thereof), $Li_aM1_xM2_yPO_{4-b}X_b$ (wherein $0.90 \leq a \leq 1.1$, $0 \leq x \leq 0.9$, $0 \leq y \leq 0.5$, $0.9 < x+y < 1.1$, $0 \leq b \leq 2$, M1 is chromium (Cr), manganese (Mn), iron (Fe), cobalt (Co), nickel (Ni), copper (Cu), zirconium (Zr), or any combination thereof, M2 is magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or any combination thereof, and X is O, F, S, P, or any combination thereof), or $Li_aM3_zPO_4$ (wherein $0.90 \leq a \leq 1.1$, $0.9 \leq z \leq 1.1$, and M3 is chromium (Cr), manganese (Mn), iron (Fe), cobalt (Co), nickel (Ni), copper (Cu), zirconium (Zr), or any combination thereof.

The conductive material may be carbon black, graphite particulates, natural graphite, artificial graphite, acetylene black, Ketjen black, carbon fiber; carbon nanotubes; metal such as copper, nickel, aluminum, and silver each of which is used in powder, fiber, or tube form; or conductive polymers such as polyphenylene derivatives, but is not limited thereto, and any material commonly used in the art as conductive materials may also be used. In other embodiments, the cathode may not include a separate conductive material.

The binder may be a vinylidene fluoride/hexafluoropropylene copolymer, polyvinylidene fluoride, polyacrylonitrile, polymethylmethacrylate, polytetrafluoroethylene (PTFE), a mixture thereof, or a styrene butadiene rubber polymer, and the solvent may be N-methylpyrrolidone (NMP), acetone, and water, but are not limited thereto and any binder and solvent commonly used in the art may also be used.

A plasticizer or a pore forming agent may further be added to the cathode active material composition to form pores inside the electrode plate.

Amounts of the cathode active material, the conductive material, the binder, and the solvent used in the cathode 10 may be the same levels as those commonly used in lithium batteries. At least one of the conductive material, the binder, and the solvent may be omitted in accordance with the use and the configuration of the lithium metal battery.

An amount of the binder included in the cathode 10 may be, for example, 0.1 to 10 wt% or 0.1 to 5 wt % based on a total weight of the cathode active material layer 12. An amount of the cathode active material included in the cathode 10 may be, for example, 80 to 99 wt %, 90 to 99 wt %, or 95 to 99 wt % based on the total weight of the cathode active material layer 12.

According to an embodiment, in the case where the lithium metal battery 1 includes a solid electrolyte as the electrolyte, the cathode active material layer 12 may further include the solid electrolyte in addition to the cathode active material. The solid electrolyte included in the cathode 10 may be the same as or different from a solid electrolyte included in an electrolyte layer 30 which will be described below. For detailed descriptions of the solid electrolyte included in the cathode 10, refer to the electrolyte layer 30 described above.

The solid electrolyte used in the cathode active material layer 12 may have a smaller average particle diameter D50 than that of the solid electrolyte used in the electrolyte layer 30. For example, the average particle diameter D50 of the solid electrolyte used in the cathode active material layer 12 may be 90 % or less, 80 % or less, 70 % or less, 60 % or less, 50 % or less, 40 % or less, 30 % or less, or 20 % or less of the average particle diameter D50 of the solid electrolyte used in the electrolyte layer 30. The average particle diameter D50 of the solid electrolyte used in the cathode active material layer 12 may be, for example, 0.1 $\mu$m to 2 $\mu$m, 0.2 $\mu$m to 1.5 $\mu$m, or 0.3 $\mu$m to 1.0 $\mu$m.

For example, an amount of the solid electrolyte included in the cathode active material layer 12 may be 1 to 15 wt %, 5 to 15 wt %, or 8.0 to 12.0 wt % based on the total weight of the cathode active material layer 12.

For example, in the case where the lithium metal battery 1 includes a solid electrolyte, the cathode active material layer 12 included in the lithium metal battery 1 may include a binder. The binder may be styrene butadiene rubber (SBR), polytetrafluoroethylene, polyvinylidene fluoride, or polyethylene, but is not limited thereto and any binders commonly available in the art may also be used. An amount of the binder included in the cathode active material layer 12 may be, for example, 0.1 to 5 wt %, 0.5 to 3 wt %, or 1.0 to 2.0 wt % based on the total weight of the cathode active material layer 12.

In the case where the lithium metal battery 1 includes a solid electrolyte, the cathode active material layer 12 included in the lithium metal battery 1 may include a conductive material. The conductive material may be, for example, a carbonaceous conductive material or a metallic conductive material. The conductive material may be, for example, graphite, carbon black, acetylene black, Ketjen black, carbon fiber, carbon tube, or metal powder, but is not limited thereto, and any conductive materials commonly available in the art may also be used. An amount of the conductive material included in the cathode active material layer 12 may be, for example, 0.1 to 10 wt %, 0.5 to 5 wt %, or 1.0 to 4.0 wt % based on the total weight of the cathode active material layer 12. The cathode active material layer 12 may further include, for example, a filler, a coating agent, a dispersant, and an ion-conductive adjuvant in addition to the cathode active material, the solid electrolyte, the binder, and the conductive material described above.

The cathode current collector 11 may be, for example, in the form of a plate or a foil formed of aluminum (Al), indium (In), copper (Cu), magnesium (Mg), stainless steel, titanium (Ti), iron (Fe), cobalt (Co), nickel (Ni), zinc (Zn), germanium (Ge), lithium (Li), or an alloy thereof. The cathode current collector may be omitted. The cathode current collector 11 may further include a carbon layer disposed on one side or both sides of a metal substrate. By additionally disposing the carbon layer on the metal substrate, corrosion of the metal of the metal substrate caused by the solid electrolyte included in the cathode layer may be prevented and interfacial resistance between the cathode active material layer 12 and the cathode current collector 11 may be reduced. A thickness of the carbon layer may be, for example, 1 $\mu$m to 5 $\mu$m, 1 $\mu$m to 4 $\mu$m, or 1 $\mu$m to 3 $\mu$m. In the case where the thickness of the carbon layer is too small, it may be difficult to completely prevent contact between the metal substrate and the solid electrolyte. In the case where the thickness of the carbon layer is too large, energy density of an all-solid secondary battery may decrease. The carbon layer may include amorphous carbon, crystalline carbon, and the like. A thickness of the cathode current collector 11 including a metal substrate and, optionally, a carbon layer may be, for example, 10 $\mu$m to 50 $\mu$m, 10 $\mu$m to 40 $\mu$m, or 10 $\mu$m to 30 $\mu$m, but is not limited thereto, and may vary according to required characteristics of the all-solid lithium battery.

According to an embodiment, the cathode 10 may further include the cathode current collector 11 and the cathode active material layer 12 disposed on the cathode current collector 11 and may further include an inactive member disposed on side of the cathode active material layer 12. An area of the cathode active material layer 12 may be smaller than an area of the electrolyte layer 30 in contact with the cathode active material layer 12. Because the inactive member is arranged to surround side surfaces of the cathode active material layer 12, an area error between the cathode active material layer 12 and the electrolyte layer 30 may be corrected. The inactive member is a member not including an electrochemically active material, e.g., an electrode active material. The electrode active material may be a material that allows intercalation/deintercalation of lithium. The inactive member may be formed of a material commonly used in the art, other than the electrode active material. The inactive member may be in contact with the electrolyte layer 30 in a state surrounding side surfaces of the cathode active material layer 12. Because the inactive member is in contact with the electrolyte layer 30 while surrounding side surfaces of the cathode active material layer 12, cracks of the electrolyte layer 30 caused by a pressure difference during a press-applying process in a portion of the electrolyte layer 30 not in contact with the cathode active material layer 12 may be effectively inhibited. Because the difference between the area of the cathode active material layer 12 and the area of the electrolyte layer 30 is corrected by the area of the inactive member, cracks of the electrolyte layer 30 caused by a pressure difference during a pressing process may be effectively inhibited. The inactive member may be disposed between the cathode current collector 11 and the electrolyte layer 30 facing each other. The inactive member may serve as a filler filling a space between the cathode current collector 11 and the electrolyte layer 30 facing each other. The inactive member may include at least one selected from a lithium-ion insulator and a lithium-ion conductor. The inactive member may be an electronic insulator. That is, the inactive member may not be an electronic conductor. The inactive member may be an organic material, an inorganic material, or an organic/inorganic composite material. The organic material may be, for example, a polymer. The inorganic material may be, for example, a ceramic such as a metal oxide. The organic/inorganic composite material may be a composite of a polymer and a metal oxide. The inactive member may include, for example, at least one selected from an insulating polymer, an ion-conductive polymer, an insulating inorganic material, an oxide-based solid electrolyte, and a sulfide-based solid electrolyte. The inactive member may be, for example, an olefin-based polymer such as polypropylene (PP) and polyethylene (PE). The inactive member may be, for example, a gasket. The thickness of the inactive member may be the same as or similar to the thickness of the cathode active material layer 12.

According to an embodiment, a current density of the cathode 10 may be 1 mAh/cm$^2$ to 20 mAh/cm$^2$. For example, the current density of the cathode 10 may be 1.5 mAh/cm$^2$ to 20 mAh/cm$^2$, 2 mAh/cm$^2$ to 20 mAh/cm$^2$, 1 mAh/cm$^2$ to 18 mAh/cm$^2$, 1 mAh/cm$^2$ to 16 mAh/cm$^2$, 1 mAh/cm$^2$ to 14 mAh/cm$^2$, 1 mAh/cm$^2$ to 12 mAh/cm$^2$, 1 mAh/cm$^2$ to 10 mAh/cm$^2$, or 2 mAh/cm$^2$ to 10 mAh/cm$^2$.

(Separator)

Subsequently, a separator to be inserted between the cathode 10 and the anode 20 is prepared.

Any separator commonly used in the art for lithium batteries may be used. For example, any separator having low resistance to ion migration of the electrolyte and excellent electrolyte-retaining ability may be used. For example, the separator may be selected from glass fiber, polyester, Teflon, polyethylene, polypropylene, polytetrafluoroethylene (PTFE), or any combination thereof, each of which is a non-woven or woven fabric. For example, a windable separator including polyethylene or polypropylene may be used in lithium-ion batteries and a separator having excellent organic electrolyte-retaining ability may be used in lithium-ion polymer batteries.

The separator may be prepared according to the following exemplary method. However, the method is not limited thereto and adjusted according to required conditions.

First, a polymer resin, a filler, and a solvent may be mixed to prepare a separator composition. The separator composition may directly be applied onto an electrode and dried to prepare a separator. Alternatively, the separator composition is cast on a support and dried and then a separator film separated from the support is laminated on an electrode to form a separator.

The polymer used to prepare the separator is not limited and any polymer commonly used as a binder for electrode plates may also be used. For example, a vinylidene fluoride/hexafluoropropylene copolymer, polyvinylidenefluoride (PVDF), polyacrylonitrile, polymethylmethacrylate, or any mixture thereof may be used.

(Electrolyte)

Subsequently, an electrolyte may be prepared.

The electrolyte layer 30 may include, for example, a liquid electrolyte, a semi-solid gel electrolyte, a solid electrolyte, or any combination thereof.

For example, the electrolyte may be an organic electrolytic solution. The organic electrolytic solution may be prepared, for example, by dissolving a lithium salt in an organic solvent.

Any organic solvent commonly used in the art may be used. For example, the organic solvent may be propylene carbonate, ethylene carbonate, fluoroethylene carbonate, butylene carbonate, dimethyl carbonate, diethyl carbonate, methylethyl carbonate, methylpropyl carbonate, ethylpropyl carbonate, methylisopropyl carbonate, dipropyl carbonate, dibutyl carbonate, benzonitrile, acetonitrile, tetrahydrofuran, 2-methyltetrahydrofuran, $\gamma$-butyrolactone, dioxorane, 4-methyldioxorane, N,N-dimethyl formamide, dimethyl acetamide, dimethylsulfoxide, dioxane, 1,2-dimethoxyethane, sulforane, dichloroethane, chlorobenzene, nitrobenzene, diethylene glycol, dimethyl ether, or any mixture thereof.

The lithium salt may also be any lithium salt commonly used in the art. For example, the lithium salt may be $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (wherein $1 \le x \le 20$ and $1 \le y \le 20$), LiCl, LiI, or any mixture thereof. A concentration of the lithium salt may be, for example, 0.1 M to 5.0 M.

For example, the semi-solid gel electrolyte may be in the form of a gel or a semi-solid. Compared to a fully solid form, a semi-solid gel electrolyte in the form of a gel or a semi-solid allows one or more selected from lithium metal and lithium alloys to freely expand during charging and discharging, thereby addressing the drawbacks of conventional lithium metal batteries described above.

For example, the semi-solid gel electrolyte may include one or more selected from lithium metal and lithium alloys, and a liquid electrolyte. For example, the semi-solid gel electrolyte may be prepared by supplying a composition for forming a semi-solid gel electrolyte and drying the composition.

The composition for forming the semi-solid gel electrolyte may be prepared by mixing one or more selected from lithium metal and lithium alloys with the liquid electrolyte. The composition for forming the semi-solid gel electrolyte has a gel or semi-solid form. A viscosity of the composition for forming the semi-solid gel electrolyte may be, for example, but not limited to, 5 cP or less, for example, 2.5 to 4.0 cp, at 25 °C.

The solid electrolyte may be, for example, an oxide-based solid electrolyte, a sulfide-based solid electrolyte, or any combination thereof.

The solid electrolyte may be, for example, an oxide-based solid electrolyte. The oxide-based solid electrolyte may include, for example, at least one selected from $Li_{1+x+y}Al_xTi_{2-x}Si_yP_{3-y}O_{12}$ (wherein $0 < x < 2$ and $0 \le y < 3$), $BaTiO_3$, $Pb(Zr,Ti)O_3$ (PZT), $Pb_{1-x}La_xZr_{1-y}Ti_yO_3$ (PLZT, where $0 \le x < 1$ and $0 \le y < 1$), $PB(Mg_3Nb_{2/3})O_3-PbTiO_3$ (PMN-PT), $HfO_2$, $SrTiO_3$, $SnO_2$, $CeO_2$, $Na_2O$, $MgO$, $NiO$, $CaO$, $BaO$, $ZnO$, $ZrO_2$, $Y_2O_3$, $Al_2O_3$, $TiO_2$, $SiO_2$, $Li_3PO_4$, $Li_xTi_y(PO_4)_3$ (wherein $0 < x < 2$ and $0 < y < 3$), $Li_xAl_yTi_z(PO_4)_3$ (wherein $0 < x < 2$, $0 < y < 1$, and $0 < z < 3$), $Li_{1+x+y}(Al, Ga)_x(Ti, Ge)_{2-x}Si_yP_{3-y}O_{12}$ (wherein $0 \le x \le 1$ and $0 \le y \le 1$), $Li_xLa_yTiO_3$ (wherein $0 < x < 2$ and $0 < y < 3$), $Li_2O$, $LiOH$, $Li_2CO_3$, $LiAlO_2$, $Li_2O$-$Al_2O_3$-$SiO_2$-$P_2O_5$-$TiO_2$-$GeO_2$, and $Li_{3+x}La_3M_2O_{12}$ (wherein M = Te, Nb, or Zr, and x is an integer from 1 to 10). The solid electrolyte may be manufactured by a sintering method, or the like. For example, the oxide-based solid electrolyte may be a garnet-type solid electrolyte selected from $Li_7La_3Zr_2O_{12}$ (LLZO) and $Li_{3+x}La_3Zr_{2-a}M_aO_{12}$ (M doped LLZO,

wherein M=Ga, W, Nb, Ta, or Al and x is an integer from 1 to 10, and 0<a<2).

For example, the sulfide-based solid electrolyte may include, for example, lithium sulfide, silicon sulfide, phosphorous sulfide, boron sulfide, or any combination thereof. The sulfide-based solid electrolyte particles may include $Li_2S$, $P_2S_5$, $SiS_2$, $GeS_2$, $B_2S_3$ or any combination thereof. The sulfide-based solid electrolyte particles may be $Li_2S$ or $P_2S_5$. Sulfide-based solid electrolyte particles are known to have higher lithium ion conductivity than other inorganic compounds. For example, the sulfide-based solid electrolyte may include $Li_2S$ and $P_2S_5$. If a sulfide solid electrolyte material constituting the sulfide-based solid electrolyte includes $Li_2S$-$P_2S_5$, a mixing molar ratio of $Li_2S$ to $P_2S_5$ may be, for example, in the range of about 50:50 to about 90:10. In addition, an inorganic solid electrolyte prepared by adding $Li_3PO_4$, a halogen atom, a halogen compound, $Li_{2+2x}Zn_{1-x}GeO_4$ ("LISICON", wherein 0≤x<1), $Li_{3+y}PO_{4-x}N_x$ ("LIPON", wherein 0<x<4 and 0<y<3), $Li_{3.25}Ge_{0.25}P_{0.75}S_4$ ("Thio-LISICON"), $Li_2O$-$Al_2O_3$-$TiO_2$-$P_2O_5$ ("LATP"), or the like to an inorganic solid electrolyte such as $Li_2S$-$P_2S_5$, $SiS_2$, $GeS_2$, $B_2S_3$, or any combination thereof may be used as the sulfide-based solid electrolyte.

The sulfide-based solid electrolyte may include, for example, at least one selected from $Li_2S$-$P_2S_5$, $Li_2S$-$P_2S_5$-LiX (where X is a halogen atom) $Li_2S$-$P_2S_5$-$Li_2O$, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (where m and n are positive numbers, and Z is Ge, Zn, or Ga), $Li_2S$-$GeS_2$, $Li_2S$-$SiS_2$-$Li_3PO_4$, $Li_2S$-$SiS_2$-$Li_pMO_q$ (where p and q are positive numbers and M is P, Si, Ge, B, Al, Ga, or In), $Li_{7-x}PS_{6-x}Cl_x$ (where 0≤x≤2), $Li_{7-x}PS_{6-x}Br_x$ (where 0≤x≤2), and $Li_{7-x}PS_{6-x}I_x$ (where 0≤x≤2). The sulfide-based solid electrolyte may be prepared by treating a starting material such as $Li_2S$ and $P_2S_5$ by melt quenching or mechanical milling. Heat treatment may be performed after such treatment. The solid electrolyte may be in an amorphous state, a crystalline state, or a mixed state thereof. For example, the solid electrolyte may include, for example, sulfur (S), phosphorus (P), and lithium (Li) as components among materials for the above-described sulfide-based solid electrolyte. For example, the solid electrolyte may be a material including $Li_2S$-$P_2S_5$. In the case where the material including $Li_2S$-$P_2S_5$ is used as the sulfide-based solid electrolyte material constituting the solid electrolyte, a mixing molar ratio of $Li_2S$ to $P_2S_5$ may be, for example, from 50:50 to 90:10.

The sulfide-based solid electrolyte may include, for example, an argyrodite type solid electrolyte represented by Formula 1 below:

$$<\text{Formula 1}> \qquad Li^+{}_{12-n-x}A^{n+}X^{2-}{}_{6-x}Y^-{}_x$$

In Formula 1, A is P, As, Ge, Ga, Sb, Si, Sn, Al, In, Ti, V, Nb, or Ta, X is S, Se, or Te, and Y is Cl, Br, I, F, CN, OCN, SCN, or $N_3$, wherein 1≤n≤5 and 0≤x≤2. The sulfide-based solid electrolyte may be an argyrodite-type compound including, for example, at least one selected from $Li_{7-x}PS_{6-x}Cl_x$, where 0≤x≤2, $Li_{7-x}PS_{6-x}Br_x$, where 0≤x≤2, and $Li_{7-x}PS_{6-x}I_x$, where 0≤x≤2. The sulfide-based solid electrolyte may be an argyrodite-type compound including, for example, at least one selected from $Li_6PS_5Cl$, $Li_6PS_5Br$, and $Li_6PS_5I$.

The argyrodite-type solid electrolyte may have a density of 1.5 g/cc to 2.0 g/cc. Internal resistance of the all-solid secondary battery may be reduced and penetration of the solid electrolyte layer by Li may be effectively inhibited because the argyrodite-type solid electrolyte has a density of 1.5 g/cc or more.

The sulfide-based solid electrolyte may have, for example, an elastic modulus, i.e., Young's modulus, of 35 GPa or less, 30 GPa or less, 27 GPa or less, 25 GPa or less, or 23 GPa or less. The sulfide-based solid electrolyte may have, for example, an elastic modulus, i.e., Young's modulus, of 10 GPa to 35 GPa, 10 GPa to 30 GPa, 10 GPa to 27 GPa, 10 GPa to 25 GPa, or 10 GPa to 23 GPa. Because the sulfide-based solid electrolyte has the elastic modulus within the ranges described above, temperature and/or pressure required for sintering decrease, and thus sintering of the solid electrolyte may be more easily performed.

The solid electrolyte used in the electrolyte layer 30 may have an average particle diameter D50 of, for example, 1 μm to 10 μm, 1.5 μm to 7 μm, or 2 μm to 5 μm.

An amount of the sulfide-based solid electrolyte included in the electrolyte layer 30 may be, for example, 97 to 100 wt %, 98 to 99.9 wt %, or 98.5 to 99.0 wt % based on a total weight of the electrolyte layer 30.

For example, the electrolyte layer 30 may further include a binder. The binder included in the electrolyte layer 30 may be, for example, styrene butadiene rubber (SBR), polytetrafluoroethylene, polyvinylidene fluoride, or polyethylene, but is not limited thereto, and any binders commonly available in the art may also be used. The binder of the electrolyte layer 30 may be the same as or different from the binders included in the cathode active material layer 12 and the anode active material layer 220.

An amount of the binder included in the electrolyte layer 30 may be, for example, 0.1 to 3 wt %, 0.5 to 2 wt %, or 1.0 to 2.0 wt % based on the total weight of the electrolyte layer 30.

For example, the lithium metal battery 1 includes an electrolyte layer 30, a cathode 10 disposed one side of the electrolyte layer 30, and an anode 20 disposed on the other side of the electrolyte layer 30. The cathode 10 may include a cathode active material layer 12 in contact with the electrolyte layer 30 and a cathode current collector 11 in contact with the cathode active material layer 12. The anode 20 may include an anode active material layer in contact with the electrolyte layer 30 and an anode current collector in contact with the anode active material layer 22. For example, the all-solid lithium metal battery 1 may be prepared by disposing the cathode active material layer 12 and the anode active material layer on both sides of the electrolyte layer 30, and disposing the cathode current collector 11 and the anode current collector on the cathode active material layer 12 and the anode active material layer 22, respectively. Alternatively, an all-solid lithium metal battery 1 may be prepared by sequentially stacking an anode active material layer, an electrolyte layer 30, a cathode active material layer 12, and a cathode current collector 11, on an anode current collector.

(Lithium Metal Battery)

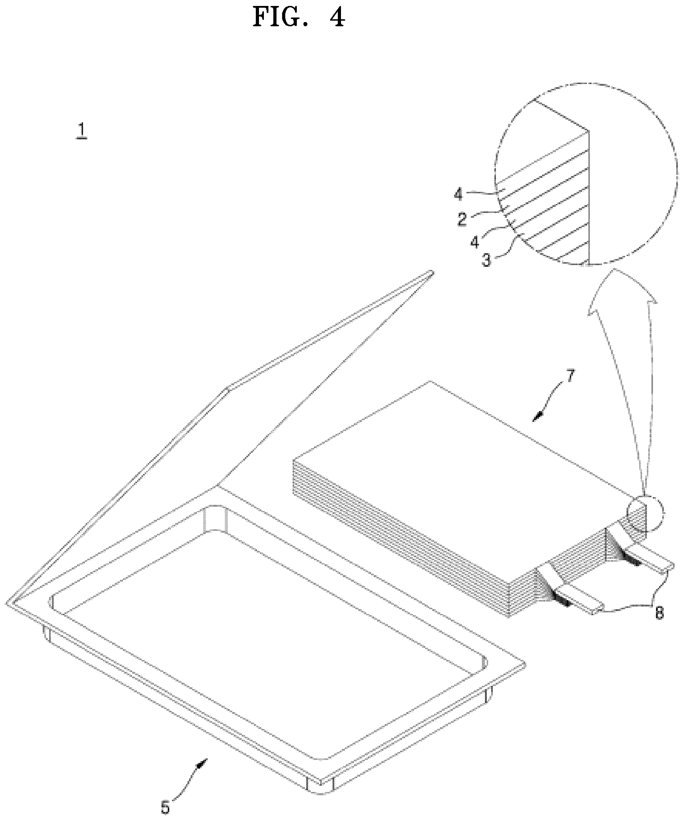

Referring to FIG. 4, a lithium metal battery 1 according to an embodiment includes a cathode 3, the above-described anode 2, and a separator 4. The cathode 3, the anode 2, and the separator 4 may be wound or folded to form a battery assembly 7. The formed battery assembly 7 may be accommodated in a battery case 5. An organic electrolytic solution is injected into the battery case 5 and the battery case 5 is sealed with a cap assembly 6 to complete preparation of the lithium metal battery 1. The battery case 5 may have a cylindrical shape, but is not limited thereto, and may have, for example, a rectangular shape or a thin film shape.

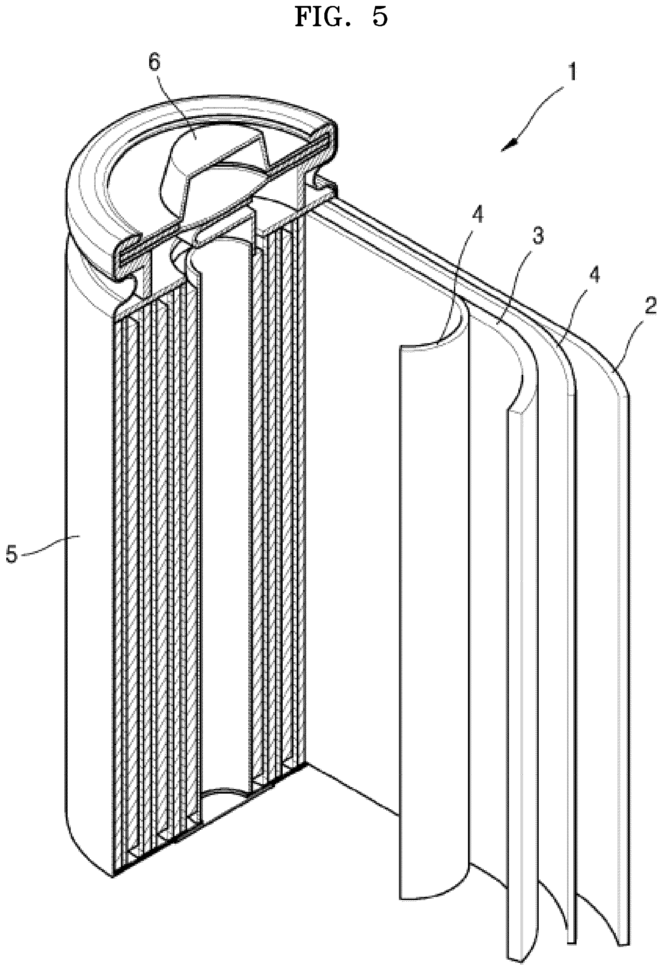

Referring to FIG. 5, a lithium metal battery 1 according to an embodiment includes a cathode 3, the above-described anode 2, and a separator 4. The separator 4 may be disposed between the cathode 3 and the anode 2, and the cathode 3, the anode 2, and the separator 4 may be wound or folded to form a battery assembly 7. The formed battery assembly 7 may be accommodated in a battery case 5. The lithium battery 1 may include an electrode tab serving as an electrical passage for inducing a current generated in the battery assembly 7 to the outside. An organic electrolytic solution is injected into the battery case 5 and the battery case 5 is sealed to complete preparation of the lithium metal battery 1. The battery case 5 may have a rectangular shape, but is not limited thereto, and may also have for example, a cylindrical shape or a thin film shape.

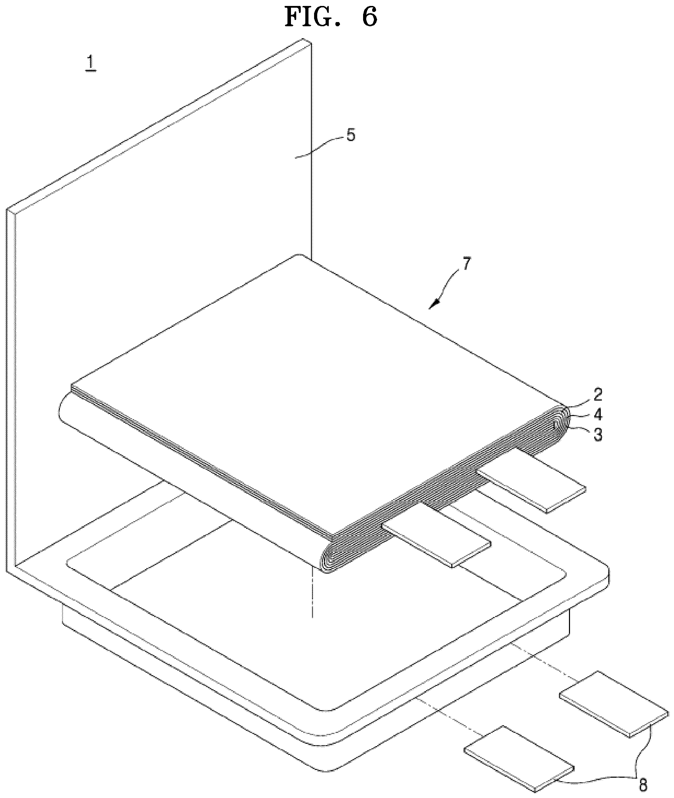

Referring to FIG. 6, a lithium metal battery 1 according to an embodiment includes a cathode 3, the above-described anode 2, and a separator 4. The separator 4 may be disposed between the cathode 3 and the anode 2 to form a battery assembly. The battery assembly 7 may be stacked in a bi-cell structure and accommodated in a battery case 5. The lithium battery 1 may include an electrode tab 8 serving as an electrical passage for inducing a current generated in the battery assembly 7 to the outside. An organic electrolytic solution is injected into the battery case 5 and the battery case 5 is sealed to complete preparation of the lithium metal battery 1. The battery case 5 may have a rectangular shape, but is not limited thereto, and may also have for example, a cylindrical shape or a thin film shape.

In a pouch-type lithium metal battery, a pouch may be used as the battery case of the lithium metal batteries shown in FIGS. 4 to 6. A pouch-type lithium metal battery includes at least one battery assembly. The separator may be disposed between the cathode and the anode to form a battery assembly. The battery assembly is stacked in a bi-cell structure, impregnated with an organic electrolytic solution, accommodated in a pouch, and sealed to complete preparation of the pouch-type lithium metal battery. For example, although not shown in the drawings, the above-described cathode, anode and separator may be simply stacked in a battery assembly and accommodated in a pouch, or wound in a jelly-roll form or folded in a battery assembly and accommodated in a pouch. Subsequently, an organic electrolytic solution may be injected into the pouch and the pouch is sealed to complete preparation of the lithium metal battery.

Due to excellent lifespan characteristics and high rate properties, lithium metal batteries may be used in, for example, electric vehicles EVs. For example, lithium batteries may be used in hybrid vehicles such as plug-in hybrid electric vehicles (PHEVs). In addition, lithium batteries may be used in the fields requiring a large amount of power storage. For example, lithium batteries may be used in E-bikes and electric tools.

A plurality of lithium metal batteries may be stacked to form a battery module, and a plurality of battery modules constitutes a battery pack. Such battery packs may be used in any device that requires high capacity and high output. For example, battery packs may be used in laptop computers, smart phones, and electric vehicles. For example, a battery module may include a plurality of batteries and a frame holding the batteries. The battery pack may include, for example, a plurality of battery modules and a bus bar connecting the battery modules. The battery module and/or the battery pack may further include a cooling device. The plurality of battery packs may be controlled by a battery management system. The battery management system may include a battery pack, and a battery control device connected to the battery pack.

[Method of Manufacturing Anode]

A method of manufacturing the anode 20 according an embodiment may include: preparing an anode structure including an anode current collector 210, an anode active material layer 220 disposed on the anode current collector 210, and a porous layer 230 disposed on the anode active material layer 220; and inserting at least a portion of the porous layer 230 into the anode active material layer 220 by rolling the anode structure by a roll press.

For example, the preparing of an anode structure may include preparing the anode current collector 210, preparing the anode active material layer 220 on the anode current collector 210, an preparing the porous layer 230 on the anode active material layer 220.

For example, the anode current collector 210, the anode active material layer 220, and the porous layer 230 are as describe above.

For example, at least a portion of the porous layer 230 may be inserted into the anode active material layer 220 by rolling the anode structure by a roll press. For example, the roll press may include a plurality of rollers, and the porous layer may be inserted into the anode active material layer by inserting the anode structure into the plurality of rollers. For example, a degree to which the porous layer 230 is inserted into the anode active material layer 220 may be adjusted by controlling a gap between the plurality of rollers. For example, the degree to which the porous layer 230 is inserted into the anode active material layer 220 may be controlled by adjusting the pressure applied to the anode structure.

Hereinafter, the present inventive concept will be described in more detail with reference to the following examples and comparative examples. However, these examples are not intended to limit the purpose and scope of the present inventive concept.

(Manufacture of Lithium Metal Battery)

Example 1: Cu substrate/ Li foil/Cu foam (porosity 80 %), H = 100 %

(Preparation of Cathode)

$LiNi_{0.8}Mn_{0.1}Co_{0.1}O_2$ as a cathode active material, a carbon conductive material (Denka Black), and polyvinylidene fluoride (PVdF) were mixed in a weight ratio of 96:2:2, and the mixture was mixed with N-methylpyrrolidone (NMP) in an agate mortar to prepare a slurry.

The slurry was bar-coated by loading onto a 15 $\mu$m-thick aluminum current collector at 8.5 mg/cm$^2$ and dried at room temperature, and then dried again under vacuum at 120 °C, followed by rolling and punching to manufacture a cathode plate with a thickness of 21 $\mu$m and an electrode density of 4.1 g/cc.

A current density of the cathode was 6 mAh/cm$^2$.

(Preparation of Anode)

A 20 $\mu$m-thick lithium (Li) foil was attached to a 10 $\mu$m-thick copper (Cu) current collector. A 50 $\mu$m-thick Cu foam having a porosity of 80 % was prepared and disposed on the Li foil to prepare an anode structure. As a result of surface analysis performed on the Cu foam by X-ray photoelectron spectroscopy (XPS), an oxide peak-to-metal peak ratio was 4:1.

70 % of the total thickness of the Cu foam was not inserted into the Li foil by inserting the anode structure into a roll press. In this case, the value of Expression 1 below was 36.7 $\mu$m, and the thickness (H) of the Cu foam (first region) that was not inserted into the lithium foil was 100% of the value calculated by Expression 1.

Cathode current density (mAh/cm$^2$) * 4.89 $\mu$m/(mAh/cm$^2$) * (1/porosity of first region)          <Expression 1>

(Manufacture of Lithium Metal Battery)

A lithium metal battery was manufactured by using the cathode plate and the anode plate, both prepared above, a PTFE separator, and a solution prepared by dissolving 1.3 M LiPF6 in a mixed solvent of ethylene carbonate (EC), ethyl propionate (EP), and propyl propionate (PP) in a volume ratio of 25:30:45 as an electrolyte.

Example 2: Cu substrate/ Li foil/Cu foam (porosity 80 %), H = 130 %

A lithium metal battery was manufactured in the same manner as in Example 1, except that the thickness (H) of the Cu form not inserted into the Li foil (first region) was 130 % of the value of Expression 1 compared to Example 1.

Example 3: Cu substrate/ Li foil/Cu foam (porosity 80 %), H = 50 %

A lithium metal battery was manufactured in the same manner as in Example 1, except that the thickness of the Cu form not inserted into the Li foil was 50 % of the value of Expression 1 compared to Example 1.

Example 4: Cu substrate/ Li foil/Cu foam (porosity 80 %), H = 160 %

A lithium metal battery was manufactured in the same manner as in Example 1, except that the thickness of the Cu form not inserted into the Li foil was 160 % of the value of Expression 1 compared to Example 1.

Example 5: Cu substrate/ Li foil/acid-treated Cu foam (porosity 80 %), H = 100 %

A lithium metal battery was manufactured in the same manner as in Example 1, except that hydrochloric acid-treated Cu form was used compared to Example 1. As a result of surface analysis conducted on the hydrochloric acid-treated Cu foam by X-ray photoelectron spectroscopy (XPS), an oxide peak-to-metal peak ratio was 11:1.

Example 6: Cu substrate/ Li foil/ Cu foam (porosity 50 %), H = 100 %

A lithium metal battery was manufactured in the same manner as in Example 1, except that Cu form having a porosity of 50 % was used compared to Example 1.

Comparative Example 1: Cu substrate/ Cu foam (porosity 80 %)

A lithium metal battery was manufactured in the same manner as in Example 1, except that the Cu foam was directly attached to the anode current collector but the Li foil was not attached to the anode current collector compared to Example 1.

Comparative Example 2: Cu substrate/ Li foil

A lithium metal battery was manufactured in the same manner as in Example 1, except that the Cu foam was not inserted into the anode active material layer compared to Example 1.

Evaluation Example 1: Evaluation of Charging/discharging Characteristics at Room Temperature

Each of the lithium batteries prepared in Examples 1 to 6 and Comparative Examples 1 to 2 was charged with a constant current of 0.1 C rate at 25 °C until a voltage reached 4.55 V (vs. Li), and the charging process was cut-off at a rate of 0.05 C rate in a constant voltage mode while the voltage of 4.55 V was maintained. Subsequently, the lithium battery was discharged with a constant current of 0.1 C rate until the voltage reached 3.0 V (vs. Li) during discharging (formation cycle).
The lithium battery that had undergone the formation cycle was charged with a constant current with a current of 0.2 C rate at 25 °C until the voltage reached 4.55 V (vs. Li), and then the charging process was cut-off at a current of 0.05 C rate in a constant voltage mode while maintaining the voltage of 4.55 V. Subsequently, the lithium battery was discharged with a constant current of 0.2 C rate until the voltage reached 3.0 V (vs. Li) during discharging (1st cycle). In this regard, DC internal resistance (DC-IR) was calculated by measuring voltage drop (V) caused by supplying a current of 1 C for 1 second at an SOC of 10 (where the battery is charged to have a charging capacity of 10 % on the assumption that a full charging capacity of the battery is 100 %, i.e., the battery is discharged by 90 % when viewed in the discharge state).
The lithium battery that had undergone the 1st cycle was charged with a constant current of 1 C rate at 25 °C until the voltage reached 4.55 V (vs. Li), and then the charging process was cut-off at a current of 0.05 C rate in a constant voltage mode while maintaining the voltage of 4.55 V. Subsequently, the lithium batteries were discharged with a constant current of 1 C rate until the voltage reached 3.0 V (vs. Li) (2nd cycle). This charging/discharging cycle was repeated under the same conditions until 200th cycle (200 times). In this regard, capacity retention ratio for each 200th cycle was calculated.
The lithium metal batteries were rested for 10 minutes after every charging/discharging cycle.
Among the results of room temperature charging and discharging, the number of cycles satisfying the initial efficiency of 0.2 C (%) and the capacity retention ratio of 80 % is shown in Table 1 below. A capacity retention ratio (%) at the each cycle is defined as Equation 1 below.

Capacity retention ratio [%] = [Discharging capacity at each cycle / discharging capacity at 1st cycle] $\times$ 100      Equation 1

[Table 1]

| | Porous layer | | | Initial efficiency (0.2 C, %) | No. of cycles (@80 %) |
|---|---|---|---|---|---|
| | Thickness ratio (%) of first region (H) | Porosity (%) | XPS ratio | Initial efficiency (0.2 C, %) | No. of cycles (@80 %) |
| Example 1 | 100 | 80 | 4:1 | 95.7 | 126 |
| Example 2 | 130 | 80 | 4:1 | 95.8 | 141 |
| Example 3 | 50 | 80 | 4:1 | 95.1 | 74 |
| Example 4 | 160 | 80 | 4:1 | 94.3 | 82 |
| Example 5 | 100 | 80 | 11:1 | 96.1 | 137 |
| Example 6 | 100 | 50 | 4:1 | 94.3 | 111 |
| Comparative Example 1 | - | 80 | 4:1 | 92.2 | 10 |
| Comparative Example 2 | - | 80 | 4:1 | 94.9 | 65 |

As shown in Table 1, the lithium metal batteries according to Examples 1 to 6 had lower DC-IR and improved lifespan compared to the lithium batteries of Comparative Examples 1 to 2.

Although embodiments are described above with reference to illustrated drawing, the present inventive concept is not limited thereto. It is obvious that various alternations and modifications will be apparent to one or ordinary skill in the art to which this application belongs within protection coverage of the inventive concept.

EXPLANATION OF REFERENCE NUMERALS DESIGNATING THE MAJOR ELEMENTS OF THE DRAWINGS

| | | | |
|---|---|---|---|
| 1 | lithium metal battery | 2, 20 | anode |
| 3, 10 | cathode | 4 | separator |
| 5 | battery case | 6 | cap assembly |
| 7 | battery assembly | 8 | electrode tab |
| 11 | cathode current collector | 12 | cathode active material layer |
| 20 | anode | 30 | electrolyte layer |
| 210 | anode current collector | 220 | anode active material layer |
| 230 | porous layer | 240 | lithium plated layer |
| A1 | first region | A2 | second region |
| A3 | third region | | |

**Claims**

1. A lithium metal battery comprising: a cathode; an anode; and an electrolyte disposed between the cathode and the anode,

   wherein the anode comprises an anode current collector,
   an anode active material layer disposed on the anode current collector, and
   a porous layer including a porous structure,
   the porous layer comprises a first region exposed on the anode active material layer, and a second region inserted into the anode active material layer, and
   the anode active material layer comprises the second region into which the porous layer is inserted, and a third region into which the porous layer is not inserted.

2. The lithium metal battery of claim 1,
   wherein a thickness of the first region satisfies 100 to 130 % of Expression 1 below:

Cathode current density (mAh/cm$^2$) * 4.89 $\mu$m/(mAh/cm$^2$) * (1/porosity of first region)     Expression 1

3. The lithium metal battery of claim 1,

wherein a lithium plated layer is formed on the anode active material layer by charging the lithium metal battery, and
a thickness of the lithium plated layer is 130 % or less of a thickness of the first region.

4. The lithium metal battery of claim 1,
wherein a porosity of the porous structure included in the first region of the porous layer is 1 to 99 %.

5. The lithium metal battery of claim 1,
wherein sizes of pores included in the first region of the porous layer is 1 nm to 10 $\mu$m.

6. The lithium metal battery of claim 1,

wherein a thickness of the first region of the porous layer is 1 $\mu$m to 100 $\mu$m, and
a thickness of the second region of the porous layer is 1 $\mu$m to 50 $\mu$m.

7. The lithium metal battery of claim 1,
wherein a thickness of the second region is 70 % or less of a thickness of the anode active material layer.

8. The lithium metal battery of claim 1,
wherein hardness of the porous layer is greater than hardness of the anode active material layer.

9. The lithium metal battery of claim 1,

wherein the porous layer comprises a metal or a carbonaceous material, and
the metal comprises copper (Cu), nickel (Ni), stainless steel (SUS), iron (Fe), or cobalt (Co).

10. The lithium metal battery of claim 1,
wherein the porous structure includes a foam structure or a mesh structure.

11. The lithium metal battery of claim 1,
wherein the porous structure is acid-treated.

12. The lithium metal battery of claim 1,
wherein the acid-treated porous structure has an oxide peak to metal peak ratio, as analyzed by X-ray photoelectron spectroscopy (XPS), of 50:1 to 1:1.

13. The lithium metal battery of claim 1,
further comprising a coating layer formed on a surface of the porous structure.

14. The lithium metal battery of claim 1,
wherein the anode active material layer comprises lithium metal or a lithium alloy.

15. The lithium metal battery of claim 1,
wherein a thickness of the third region of the anode active material layer is 0.1 to 10 $\mu$m.

16. The lithium metal battery of claim 1,
wherein the anode current collector has a form selected from a sheet, foil, film, plate, porous structure, mesoporous structure, through-hole-containing structure, polygonal ring, mesh, foam, and nonwoven structure.

17. The lithium metal battery of claim 1,

wherein the anode current collector comprises a base film and a metal layer disposed on one side or both sides of the base film,

wherein the base film comprises a polymer, the polymer comprising polyethyleneterephthalate (PET), polyethylene (PE), polypropylene (PP), polybutyleneterephthalate (PBT), polyimide (PI), or a combination thereof, and

the metal layer comprises indium (In), copper (Cu), magnesium (Mg), titanium (Ti), iron (Fe), cobalt (Co), nickel (Ni), zinc (Zn), aluminum (Al), germanium (Ge), lithium (Li), or an alloy thereof.

18. The lithium metal battery of claim 1,
   wherein a current density of the cathode is 1 mAh/cm$^2$ to 20 mAh/cm$^2$.

19. The lithium metal battery of claim 1,
   wherein the electrolyte comprises a liquid electrolyte, a semi-solid gel electrolyte, a solid electrolyte, or a combination thereof.

20. A method of manufacturing the anode of the lithium metal battery of claim 1, the method comprising:

   preparing an anode structure including an anode current collector, an anode active material layer disposed on the anode current collector, and a porous layer disposed on the anode active material layer; and
   inserting at least a portion of the porous layer into the anode active material layer by rolling the anode structure with a roll press.

# FIG. 1

# FIG. 2

# FIG. 3

# FIG. 4

# FIG. 5

FIG. 6

## INTERNATIONAL SEARCH REPORT

| International application No. |
|---|
| **PCT/KR2024/003731** |

| | |
|---|---|
| **A.** | **CLASSIFICATION OF SUBJECT MATTER** |

**H01M 4/13**(2010.01)i; **H01M 4/04**(2006.01)i; **H01M 4/134**(2010.01)i; **H01M 4/66**(2006.01)i; **H01M 4/70**(2006.01)i; **H01M 10/052**(2010.01)i; **H01M 4/1395**(2010.01)i; **H01M 10/0562**(2010.01)i; **H01M 10/0566**(2010.01)i; **H01M 10/0565**(2010.01)i

According to International Patent Classification (IPC) or to both national classification and IPC

| | |
|---|---|
| **B.** | **FIELDS SEARCHED** |

Minimum documentation searched (classification system followed by classification symbols)

H01M 4/13(2010.01); H01M 10/052(2010.01); H01M 10/42(2006.01); H01M 4/134(2010.01); H01M 4/38(2006.01); H01M 4/64(2006.01); H01M 50/409(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬금속전지(lithium metal battery), 음극(anode), 다공성 구조(porous structure), 음극 활물질층(anode active material layer)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| Y | KR 10-2018-0036564 A (LG CHEM, LTD.) 09 April 2018 (2018-04-09)<br>See paragraphs [0071], [0083] and [0099]; and claims 1-2 and 12. | 1-20 |
| Y | KR 10-2021-0070822 A (KOREA AUTOMOTIVE TECHNOLOGY INSTITUTE) 15 June 2021 (2021-06-15)<br>See paragraphs [0029], [0032], [0034]-[0035] and [0041]-[0042]; and claims 1-2 and 12. | 1-20 |
| Y | KR 10-2015-0000069 A (UNIST ACADEMY-INDUSTRY RESEARCH CORPORATION et al.) 02 January 2015 (2015-01-02)<br>See claims 13-14. | 11-12 |
| A | JP 2018-525795 A (NANOTEK INSTRUMENTS, INC.) 06 September 2018 (2018-09-06)<br>See entire document. | 1-20 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 June 2024** | **26 June 2024** |

| Name and mailing address of the ISA/KR | Authorized officer |
|---|---|
| **Korean Intellectual Property Office<br>Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2024/003731** |

**C.    DOCUMENTS CONSIDERED TO BE RELEVANT**

| Category* | Citation of document, with indication, where appropriate, of the relevant passages | Relevant to claim No. |
|---|---|---|
| A | KR 10-2019-0083878 A (SAMSUNG ELECTRONICS CO., LTD. et al.) 15 July 2019 (2019-07-15)<br>See entire document. | 1-20 |

Form PCT/ISA/210 (second sheet) (July 2022)

## INTERNATIONAL SEARCH REPORT
### Information on patent family members

International application No.

**PCT/KR2024/003731**

| Patent document cited in search report | | | Publication date (day/month/year) | Patent family member(s) | | | Publication date (day/month/year) |
|---|---|---|---|---|---|---|---|
| KR | 10-2018-0036564 | A | 09 April 2018 | CN | 109792044 | A | 21 May 2019 |
| | | | | CN | 109792044 | B | 13 May 2022 |
| | | | | EP | 3509138 | A2 | 10 July 2019 |
| | | | | EP | 3509138 | A4 | 23 October 2019 |
| | | | | EP | 3509138 | B1 | 08 July 2020 |
| | | | | JP | 2019-526904 | A | 19 September 2019 |
| | | | | JP | 6775849 | B2 | 28 October 2020 |
| | | | | KR | 10-2328253 | B1 | 18 November 2021 |
| | | | | US | 11302910 | B2 | 12 April 2022 |
| | | | | US | 2020-0235385 | A1 | 23 July 2020 |
| KR | 10-2021-0070822 | A | 15 June 2021 | KR | 10-2023-0141721 | A | 10 October 2023 |
| KR | 10-2015-0000069 | A | 02 January 2015 | CN | 104241620 | A | 24 December 2014 |
| | | | | CN | 104241620 | B | 03 May 2017 |
| | | | | KR | 10-1573423 | B1 | 02 December 2015 |
| | | | | US | 2014-0377653 | A1 | 25 December 2014 |
| JP | 2018-525795 | A | 06 September 2018 | CN | 108140850 | A | 08 June 2018 |
| | | | | CN | 108140850 | B | 12 August 2022 |
| | | | | JP | 6818742 | B2 | 27 January 2021 |
| | | | | KR | 10-2018-0040703 | A | 20 April 2018 |
| | | | | KR | 10-2662816 | B1 | 03 May 2024 |
| | | | | US | 10388983 | B2 | 20 August 2019 |
| | | | | US | 2017-0062869 | A1 | 02 March 2017 |
| | | | | WO | 2017-034656 | A1 | 02 March 2017 |
| KR | 10-2019-0083878 | A | 15 July 2019 | CN | 110010954 | A | 12 July 2019 |
| | | | | EP | 3509150 | A1 | 10 July 2019 |
| | | | | KR | 10-2568793 | B1 | 22 August 2023 |
| | | | | US | 11349148 | B2 | 31 May 2022 |
| | | | | US | 2019-0214672 | A1 | 11 July 2019 |
| | | | | US | 2022-0278357 | A1 | 01 September 2022 |

Form PCT/ISA/210 (patent family annex) (July 2022)